# EUROPEAN PATENT SPECIFICATION

(11) **EP 3 577 345 B1**
(45) Date of publication and mention of the grant of the patent: **25.09.2024**
(21) Application number: 18748146.0
(22) Date of filing: 05.02.2018
(51) Int. Cl.: F04D 13/16, F04D 15/02

(54) **BILGE PUMP HAVING OUTSIDE SENSING SURFACE WITH RIBS**
BILGENPUMPE MIT AUSSENERFASSUNGSFLÄCHE MIT RIPPEN
POMPE DE CALE AYANT UNE SURFACE DE DÉTECTION EXTÉRIEURE DOTÉE DE NERVURES

(30) Priority: 03.02.2017 US 201762454392 P
(43) Date of publication of application: 11.12.2019
(73) Proprietor: Flow Control LLC., Beverly, Massachusetts 01915 (US)
(72) Inventor: WEBER, Francisco Carrillo, Irvine California 92614 (US); MEZA, Humberto V., Trabuco Canyon California 92679 (US)
(74) Representative: DREISS Patentanwälte PartG mbB
(86) International application number: PCT/US2018/016858
(87) International publication number: WO 2018/145000

(56) References cited:
- EP-A1- 3 091 234
- DE-U1- 29 916 252
- US-A1- 2006 005 622
- US-A1- 2006 260 993
- US-A1- 2011 146 399
- US-B1- 7 025 643

## Description

### BACKGROUND OF THE INVENTION

### 1. Field of Invention

The present invention relates to a pump; and more particularly to a bilge pump.

### 2. Description of Related Art

In a typical centrifugal pump; fluid is accelerated through centrifugal forces exerted on it by an impeller, which are used to transmit energy to the fluid being pumped. The pump may be controlled by a system automated using a capacitive sensing device. On the bottom of the pump, an impeller is located and protected against debris in the fluid by a strainer that will help to prevent some large particulates from getting stuck on the impeller and impede the rotation of the motor. The capacitive sensing device is integrated on a printed circuit board (PCB) that is programmed to control the function of the pumping unit. The sensor basically senses the presence of water and turns the pumping unit on to evacuate the water, e.g., on bilge and shower drain systems, once that water is down to a certain remnant level the PCB will automatic turn the pump off.

The assignee of the present application manufacturers and markets bilge pumps for the marine industry. Pumps used in this application are usually centrifugal type driven by a permanent magnet DC motor. These pumps feature an inlet and a discharge from which a hose connection is attached for routing of the discharge water out of the boat or vessel. Most of these pumps are controlled either manually by means of a panel mounted toggle switch or an automatic level switch. This level switch activates the pump motor when it senses the presence of water around the pump. Level switches usually are of the float type with dry contacts or an electronic sensor type. The switch can be a separate device or can be integral to the pump itself.

The environments in which the pumps operate usually contain debris in varying amounts. By way of example, the debris/contaminants may consist of oils, paper or cloth remnants from cleaning towels or other organic matter. These contaminants work to inhibit proper operation of the sensing device. Debris can sometimes adhere to the sensing surface, thereby causing false sensing signals where secondary failure modes can occur.

US 2011/0146399 A1 describes a sensor system for sensing liquid level in a bilge.

US 2006/0260993 A1 describes a sewage tank comprising ribs with for use with a pump.

US 7 025 643 B1 describes a quick flush valve for flushing or winterizing of cooling systems of inboard marine engines.

DE 299 16 252 U1 discloses a submersible pump with an integrated capacitive level sensor.

US 2006/0005622 A1 describes a sensor system for sensing liquid level in a bilge, for use in automatic bilge pump actuation.

EP 3 091 234 A1 describes a submersible water pump, which includes a pump main body and a water level switch, the water level switch essentially consisting of at least two sensor units which are sufficiently exposed to water, as well as a control circuit unit which controls the activation and deactivation of the main pump body.

### SUMMARY OF THE INVENTION

### The Basic Invention

It is an object of the invention providing a pump designed to inhibit the adhesion of debris on the sensing surface. This object is achieved by a pump comprising the features of claim 1. By way of example, the geometry may include a series of ribs placed to decrease adhesion surface area. The theory is that if debris will not stick, this will allow the sensor to function as designed.

In operation, the pumping unit according to the present invention improves the sensing effectiveness by changing the geometric design when compared to the known pumping units. Adding ribs at the sensing area will restrict towels and other objects from being in touch with the sensor area and prevent the pump from falsely sensing when no water is around to be pumped. In addition, these ribs in conjunction with a flat outside sensing surface improve the structural design for a better heat resistance, preventing the deformation when the unit is under thermal stress environment.

### Specific Embodiment

The present invention is as defined in claim 1.

According to some embodiments, the pump may also include one or more of the following features:
The ribs may be arranged on the flat surface and dimensioned so that there is a space in-between adjacent ribs to receive the liquid between adjacent ribs when the object is stuck on, or in contact with, the ribs.

The ribs may be arranged on the outside sensing surface vertically or horizontally in relation to the pump axis.

The ribs may be symmetrically arranged on the outside sensing surface.

The ribs may include a shorter middle rib and longer outer ribs.

The ribs may be configured to provide heat resistance and structural rigidity to prevent deformation of the outside wall surface from thermal stress.

The liquid sensing device may be a capacitive sensing device, e.g., such as a printed circuit board having a capacitive sensing device.

The pump may be, or take the form of, one of the following:
a bilge pump for configuring in, and pumping the liquid from, a hull of a vessel, or
a sump pump for configuring in, and pumping the liquid from, a sump, or
a shower drain pump for configuring in, and pumping the liquid from, a shower drain.

The liquid sensing device may include a high liquid level sensor configured to sense a high liquid level and turn the pump ON, and includes a low liquid level sensor configured to sense a low liquid level and turn the pump OFF.

In effect, the new geometric ribs configured on the liquid sensing areas help to prevent objects from being stuck on the sensing surface and as a consequence avoid the malfunction of the pumping unit. These new ribs form a physical perimeter around the sensor, e.g., that avoid or prevent other object different than a liquid density to be in touch with the sensor. By way of example, these ribs may be located on a planar surface perpendicular to bottom of the pump and right at the back side of the pump, e.g., at the opposite side of the water outlet.

### BRIEF DESCRIPTION OF THE DRAWING

The drawing includes Figures 1-5D, which are not necessarily drawn to scale, as follows:
Figure 1 shows a perspective view of a computer rendition of a bilge pump, according to the present invention.
Figure 2 shows an exploded view of a computer rendition of a bilge pump, according to the present invention.
Figure 3 shows a partial cutaway view of a computer rendition of a bilge pump, according to the present invention.
Figure 4A shows a perspective side view a bilge pump, according to the present invention.
Figure 4B shows a back view the bilge pump in Figure 4A.
Figure 4C shows a perspective bottom view the bilge pump in Figure 4A.
Figure 4D shows a perspective top front view the bilge pump in Figure 4A.
Figure 5A shows a perspective side view a bilge pump, according to the present invention.
Figure 5B shows a back view the bilge pump in Figure 5A.
Figure 5C shows a perspective bottom view the bilge pump in Figure 5A.
Figure 5D shows a perspective top front view the bilge pump in Figure 5A.

In the drawing, every element is not labeled with every reference no. and lead line to reduce clutter in the drawing as a whole.

### DETAILED DESCRIPTION OF BEST MODE OF THE INVENTION

### Figures 1-3

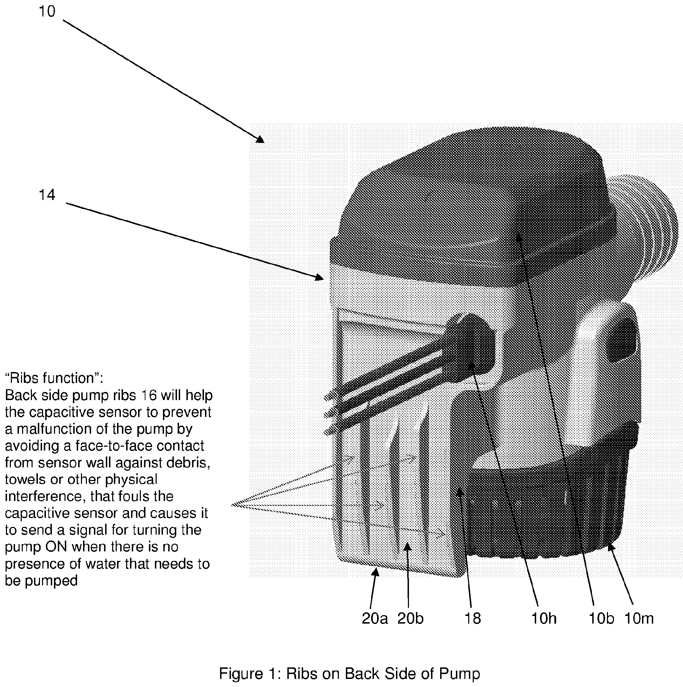

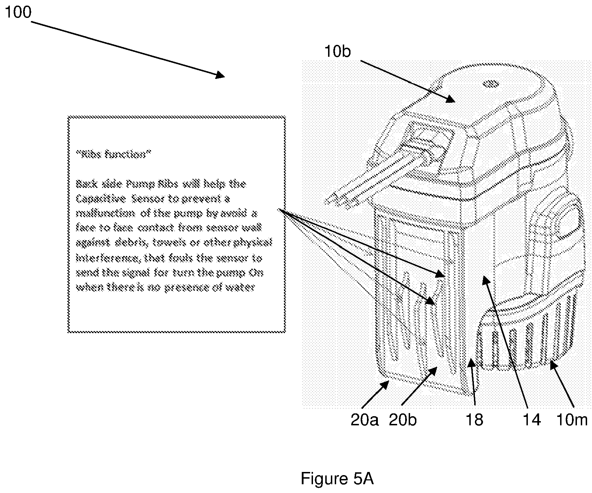

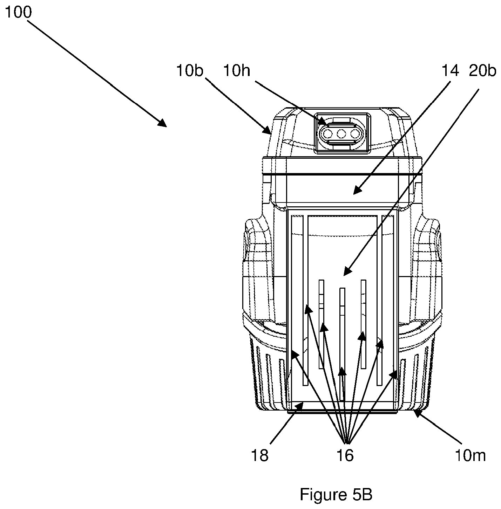

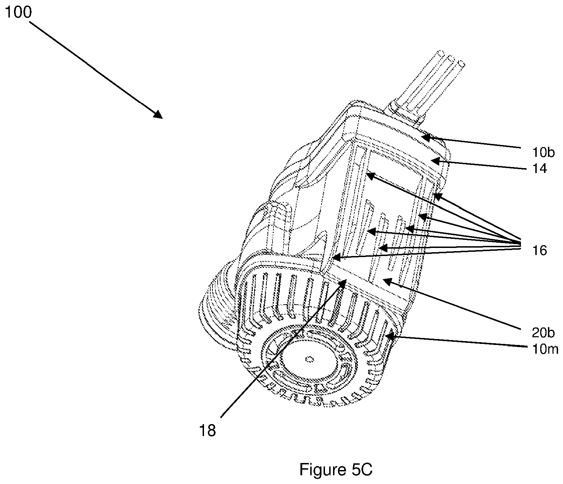

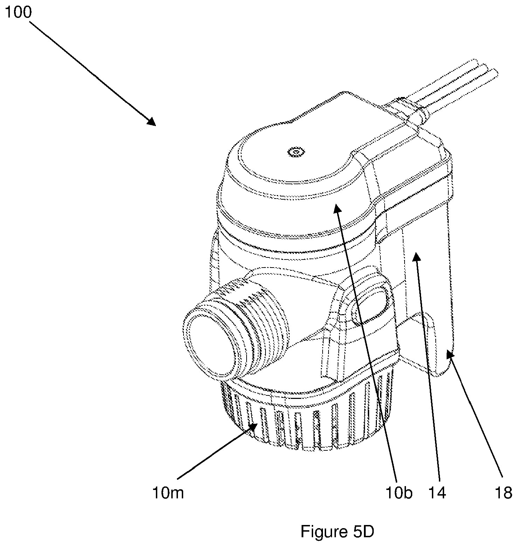

By way of example, and according to the present invention, Figures 1 thru 3 shows a pump generally indicated as 10 (Figs. 1-4D), 100 (Figs 5A-5D) featuring a new and unique combination of a liquid sensing device 12 and a pump body or housing 14.

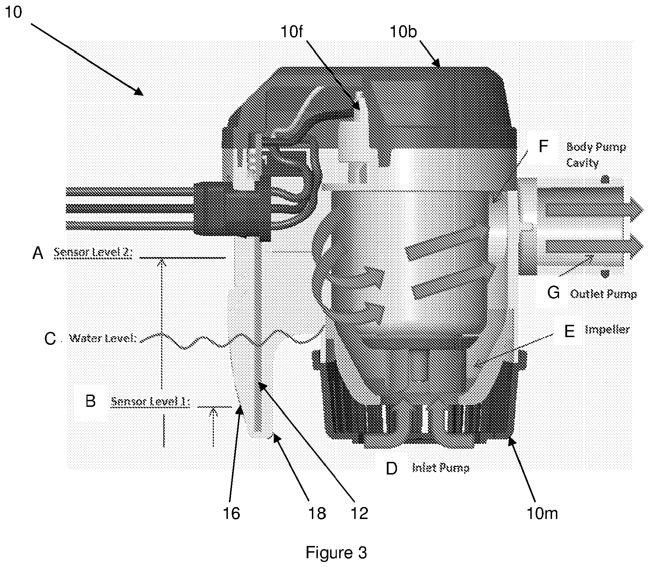

As shown in Figures 1 and 3, the pump body or housing 14 may be configured with some arrangement of back side pump ribs 16 that help the liquid sensing device 12 to prevent a malfunction of the pump 10 by avoiding face-to-face contact between an outside housing wall of the pump body or housing 14 and some debris in the liquid or fluid being pumped, e.g., such as a wet towel or other physical interference, that may foul the liquid sensing device 12 and cause it to send a signal for turning the pump 10 ON when there is no presence of water that needs to be pumped. For example, if a wet towel is stuck on or against the outside housing wall, and there is no fluid to be pumped, the liquid sensing device 12 may sense the liquid in the towel and send the signal for turning the pump 10 ON. (The pump may also stay ON, which can reduce the pump life, drain the battery of the boat or vessel, and cause other undesirable outcomes as well.)

The liquid sensing device 12 may be configured, mounted or arranged in a back part generally indicated as 18 of the housing 14.

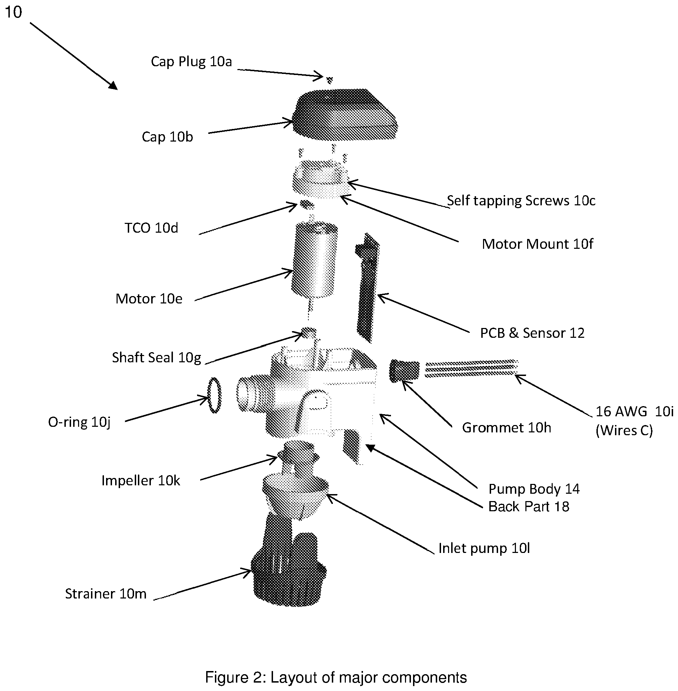

As shown in Figure 2, and by way of example, in addition to the liquid sensing device 12 and the pump body or housing 14, the major components of the pump 10 may also include a cap plug 10a, a cap 10b, a self tapping screws 10c, a thermal cutoff (TCO) 10d, a motor 10e, a motor mount 10f, a shaft seal 10g, a grommet 10h, wires 10i, an O-ring 10j, an impeller 10k, an inlet pump 10l and a strainer 10m.

### The Level Sensing Device 12

The liquid sensing device 12 may be configured to sense the level of a liquid collecting outside the pump 10 and turn the pump 10 ON/OFF for pumping the liquid. As shown in Figures 1 and 3, and by way of example, the liquid sensing device 12 may take the form of a printed circuit board (PCB) and sensor. The PCB may be configured with a capacitive sensing device. Printed circuit boards having capacitive sensing devices are known in the art, and the scope of the invention is not intended to be limited to any particular type or kind thereof either now known or later developed in the art. The scope of the invention is also not intended to be limited to any particular type or kind of liquid sensing device either now known or later developed in the art, and may include other types or kinds of liquid sensing devices other than printed circuit boards having capacitive sensing devices.

### "Normal Operation Cycle"

By way of example, consistent with that shown in Figure 3, the pump sensor 12 will determine the pump function ON/OFF by two predefined level sensor represented by bullets labeled A and B. For example, when the water level (bullet C) goes up to a sensor level 2 (bullet A), the sensor 12 will send a signal to the motor 10e and turn the pump 10 ON and make the impeller 10k rotate (bullet E), then water will be pulled by a centrifugal force of the impeller 10k from the inlet pump 10l (bullet 4) to be carried up by a centrifugal motion via and through the pump body cavity (bullet 6) and out the pump outlet (Bullet 7), so as to evacuate all water from the bilge until the water level (Bullet 3) goes down to the sensor level 1 (bullet 2), and then the sensor 12 will send the signal to turn the pump 10 OFF to complete the cycle.

### "Pump Intelligence"

By way of example, the pump sensor 12 may include built-in programming that can sense when the pump 10 is running, but not pumping water to protect the pump, as well as the vessel and the vessel's batteries in which it is being used. By way of example, in some implementations if debris fouls the sensor 12 or the pump 10 becomes air-bound, then the PCB may be configured to stop the pump from running, e.g., and begin to check periodically for water entry (such as every 2 ½ minutes) . Once the debris is removed, the pump 10 may be configured to revert to normal operation, e.g., by turning ON when the water reaches approximately 2 ½" (64 mm) (Sensor Level 2 (Fig. 2)) and by shutting OFF the water reaches approximately 5/8" (16 mm) (Sensor Level 1).

### The Housing 14

The housing 14 includes a housing wall 20 configured to contain the liquid sensing device 12. The housing wall 20 includes an outside wall surface 20a with an outside sensing surface 20b. The liquid sensing device 12 inside the housing 14 is mounted in relation to the outside sensing surface 20b. The outside sensing surface 20b includes the ribs 16 configured to extent or project outwardly away from the outside wall surface 20a, in order to prevent an object (e.g., having a density different than the liquid density) from being stuck on the outside sensing surface 20b, and allow the liquid sensing device 12 to sense the level of the liquid collecting outside the pump 10 and touching the outside sensing surface 20b, so as to reduce a malfunction of the pump 10 due to the object contacting the outside sensing surface 20b.

The outside sensing surface 20b is a flat surface, and the ribs 16 are arranged on and project from the flat surface. The ribs 16 may be arranged on the flat surface and dimensioned so that there is a space to receive the liquid between adjacent ribs when the object is stuck on, or in contact with, the ribs 16.

The ribs 16 may be configured to provide heat resistance and structural rigidity to prevent deformation of the outside wall surface 20a from thermal stress.

In effect, the new geometric ribs 16 on the sensing areas help to prevent objects from being stuck on the sensing surface and as a consequence avoid the malfunction of the pumping unit. These new ribs form a physical perimeter around the sensor that avoid other object, e.g., including other objects different than a liquid density, to be in touch with the sensor surface 20b. By way of example, these ribs 16 are located on the planar surface perpendicular to bottom of the pump and right at the back side of the pump, e.g., at the opposite side of the water outlet, consistent with that shown in Figures 1 thru 5D of the drawing.

### Figures 4A thru 4D and 5A thru 5D

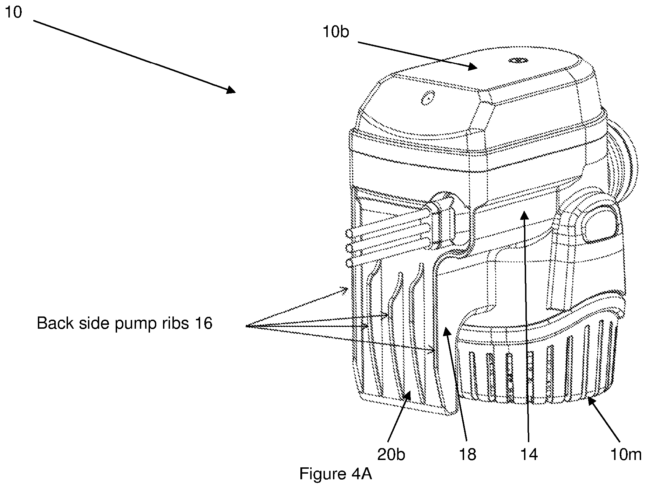

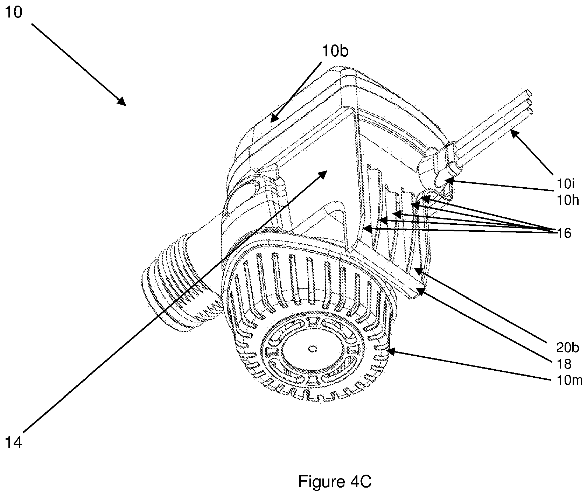

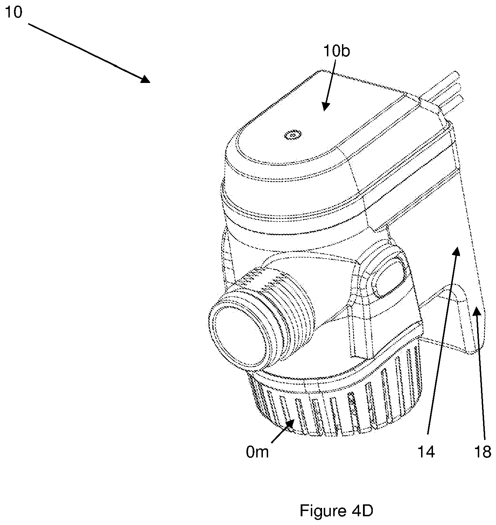

Figures 4A thru 4D show an embodiment of a pump 10 of the present invention, e.g., having five (5) ribs 16.

In comparison, Figures 5A thru 5D show an embodiment of a pump 100 of the present invention, e.g., having seven (7) ribs 16.

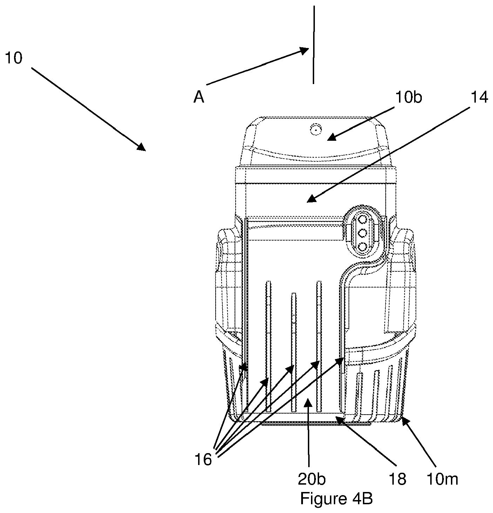

As shown, the ribs 16 are arranged on the outside sensing surface 20b vertically in relation to the pump axis A (Fig. 4B), as well as horizontally in relation to the pump axis; the ribs 16 may be symmetrically arranged on the outside sensing surface; or the ribs may include a shorter middle rib and longer outer ribs. Moreover, and by way of example, the ribs 16 may be configured with a contour and a dimension, e.g., consistent with that shown in the drawing.

However, the scope of the invention is not intended to be limited to the number of ribs 16, the placement/configuration of the ribs 16, the orientation (e.g., vertical or horizontal) of the ribs 16, the dimension of the ribs 16, etc.; and embodiments are envisioned, and the scope of the invention is intended to include, implementations having a different number of ribs, a different placement/configuration of the ribs, a different orientation (e.g., vertical or horizontal) of the ribs, a different dimension of the ribs, etc., than that shown and described herein.

### Possible Applications:

Possible applications include:
A bilge pump computerized with the sensor 12 included therein, capable to sense predefined water level and to operate depending on sensor input to turn the pump ON and OFF to evacuate the water from boat bilges. This pump is designed to be include in a system with or without bilge float switch and maintain same functionality of this pump.

## Claims

1. A pump (10) comprising:
a liquid sensing device (12) comprised in the pump and configured to sense the level of a liquid collecting outside the pump (10) and turn the pump (10) on/off for pumping the liquid; and
a housing (14) having a housing wall (20 configured to contain the liquid sensing device (12), the housing wall (20) having an outside wall surface (20a) with an outside sensing surface (20b) , the liquid sensing device (12) being arranged or mounted inside the housing (14) in relation to the outsie sensing surface (20b), in order to allow the liquid sensing device (12) to sense the level of the liquid collecting outside the pump (10) and touching the outside sensing surface (20b),
**characterised in that** the
outside sensing surface (20b) has ribs (16) configured to extend or project outwardly away from the outside wall surface (20a) , in order to prevent an object from being stuck on the outside sensing surface (20b) , so as to reduce a malfunction of the pump (10) due to the object contacting the outside sensing surface (20b),
wherein the outside sensing surface (20b) is a flat surface, and the ribs (16) are arranged on and project from the flat surface.

2. A pump according to claim 1, wherein the ribs (16) are arranged on the flat surface and dimensioned so that there is a space to receive the liquid between adjacent ribs (16) when the object is stuck on, or in contact with, the ribs (16).

3. A pump according to claim 1, wherein the liquid sensing device (12) is a capacitive sensing device.

4. A pump according to claim 1, wherein the liquid sensing device (12) is a printed circuit board having a capacitive sensing device.

5. A pump according to claim 1, wherein the ribs (16) are configured to provide heat resistance and structural rigidity to prevent deformation of the outside wall surface (20a) from thermal stress.

6. A pump according to claim 1, wherein the ribs (16) include five (5) ribs.

7. A pump according to claim 1, wherein the ribs (16) are arranged vertically in relation to the pump axis.

8. A pump according to claim 1, wherein the ribs (16)are arranged horizontally in relation to the pump axis.

9. A pump according to claim 1, wherein the ribs (16) are symmetrically arranged on the outside sensing surface (20b).

10. A pump according to claim 1, wherein the ribs (16) include a shorter middle rib (16) and longer outer ribs (16).

11. A pump according to claim 1, wherein the ribs (16) include seven (7) ribs.

12. A pump according to claim 1, wherein the pump (10) is
a bilge pump for configuring in, and pumping the liquid from, a hull of a vessel, or
a sump pump for configuring in, and pumping the liquid from, a sump, or
a shower drain pump for configuring in, and pumping the liquid from, a shower drain.

13. A pump according to claim 1, wherein the liquid sensing device (12) includes a high liquid level sensor configured to sense a high liquid level and turn the pump (10) ON, and includes a low liquid level sensor configured to sense a low liquid level and turn the pump (10) OFF.

## Patentansprüche

1. Pumpe (10) umfassend:
eine Flüssigkeitserfassungsvorrichtung (12), die in der Pumpe enthalten ist, und
konfiguriert, um den Pegel einer Flüssigkeit zu erfassen, die sich außerhalb der Pumpe (10) sammelt, und um die Pumpe (10) zum Pumpen der Flüssigkeit ein-/auszuschalten; und
ein Gehäuse (14), das eine Gehäusewand (20 aufweist, die konfiguriert ist, um die Flüssigkeitserfassungsvorrichtung (12) zu enthalten, wobei die Gehäusewand (20) eine Außenwandoberfläche (20a) mit einer Außenerfassungsoberfläche (20b) aufweist, wobei die Flüssigkeitserfassungsvorrichtung (12) in Bezug auf die Außenerfassungsoberfläche (20b) innerhalb des Gehäuses (14) angeordnet oder montiert ist, um der Flüssigkeitserfassungsvorrichtung (12) zu ermöglichen, den Pegel der Flüssigkeit zu erfassen, die sich außerhalb der Pumpe (10) sammelt und die Außenerfassungsoberfläche (20b) berührt,
**dadurch gekennzeichnet, dass**
die Außenerfassungsoberfläche (20b) Rippen (16) aufweist, die konfiguriert ist, um sich von der Außenwandoberfläche (20a) nach außen zu erstrecken oder vorzustehen, um zu verhindern, dass ein Objekt an der Außenerfassungsoberfläche (20b) steckenbleibt,
um eine Fehlfunktion der Pumpe (10) aufgrund des Objekts zu reduzieren, das die Außenerfassungsoberfläche (20b) berührt, wobei
die Außenerfassungsoberfläche (20b) eine ebene Oberfläche ist und die Rippen (16) auf der ebenen Oberfläche angeordnet sind und von dieser vorstehen.

2. Pumpe nach Anspruch 1, wobei die Rippen (16) auf der flachen Oberfläche angeordnet und bemessen sind, sodass ein Raum vorhanden ist, um die Flüssigkeit zwischen angrenzenden Rippen (16) aufzunehmen, wenn das Objekt an den Rippen (16) steckt oder mit diesen in Berührung steht.

3. Pumpe nach Anspruch 1, wobei die Flüssigkeitserfassungsvorrichtung (12) eine kapazitive Erfassungsvorrichtung ist.

4. Pumpe nach Anspruch 1, wobei die Flüssigkeitserfassungsvorrichtung (12) eine Leiterplatte ist, die eine kapazitive Erfassungsvorrichtung aufweist.

5. Pumpe nach Anspruch 1, wobei die Rippen (16) konfiguriert sind, um Hitzebeständigkeit und strukturelle Steifigkeit aufzuweisen, um eine Verformung der Außenwandoberfläche (20a) durch thermische Belastung zu verhindern.

6. Pumpe nach Anspruch 1, wobei die Rippen (16) fünf (5) Rippen einschließen.

7. Pumpe nach Anspruch 1, wobei die Rippen (16) vertikal in Bezug zu der Pumpenachse angeordnet sind.

8. Pumpe nach Anspruch 1, wobei die Rippen (16) horizontal in Bezug zu der Pumpenachse angeordnet sind.

9. Pumpe nach Anspruch 1, wobei die Rippen (16) symmetrisch auf der Außenerfassungsoberfläche (20b) angeordnet sind.

10. Pumpe nach Anspruch 1, wobei die Rippen (16) eine kürzere Mittelrippe (16) und längere Außenrippen (16) einschließen.

11. Pumpe nach Anspruch 1, wobei die Rippen (16) sieben (7) Rippen einschließen.

12. Pumpe nach Anspruch 1, wobei die Pumpe (10) eine Lenzpumpe zum Konfigurieren in einen Schiffsrumpf und zum Abpumpen der Flüssigkeit aus diesem ist, oder
eine Sumpfpumpe zum Konfigurieren in einen Sumpf und zum Abpumpen der Flüssigkeit aus diesem oder
eine Duschabflusspumpe zum Konfigurieren in einen Duschabfluss und zum Abpumpen von Flüssigkeit aus diesem.

13. Pumpe nach Anspruch 1, wobei die Flüssigkeitserfassungsvorrichtung (12) einen Sensor für hohen Flüssigkeitspegel einschließt, der konfiguriert ist, um einen hohen Flüssigkeitspegel zu erfassen und die Pumpe (10) auf EIN zu schalten, und einen Sensor für niedrigen Flüssigkeitspegel einschließt, der konfiguriert ist, um einen niedrigen Flüssigkeitspegel zu erfassen und die Pumpe (10) auf AUS zu schalten.

## Revendications

1. Pompe (10)comprenant :
un dispositif de détection de liquide (12) intégré à la pompe et configuré pour détecter le niveau d'un liquide s'accumulant à l'extérieur de la pompe (10) et activer/désactiver la pompe (10) pour pomper le liquide ; et
un boîtier (14) ayant une paroi de boîtier (20) configurée pour contenir le dispositif de détection de liquide (12), la paroi de boîtier (20) ayant une surface de paroi extérieure (20a) avec une surface de détection extérieure (20b), le dispositif de détection de liquide (12) étant disposé ou monté à l'intérieur du boîtier (14) par rapport à la surface de détection extérieure (20b), afin de permettre au dispositif de détection de liquide (12) de détecter le niveau du liquide s'accumulant à l'extérieur de la pompe (10) et touchant la surface de détection extérieure (20b), **caractérisée par le fait que** la surface de détection extérieure (20b) comporte des nervures (16) configurées pour s'étendre ou faire saillie vers l'extérieur par rapport à la surface de la paroi extérieure (20a), afin d'empêcher un objet d'être collé sur la surface de détection extérieure (20b), de manière à réduire tout dysfonctionnement de la pompe (10) dû à l'objet entrant en contact avec la surface de détection extérieure (20b), la surface de détection extérieure (20b) étant une surface plane, et les nervures (16) étant disposées sur la surface plane et faisant saillie à partir de cette dernière.

2. Pompe selon la revendication 1, dans laquelle les nervures (16) sont disposées sur la surface plane, et dimensionnées de manière à ménager un espace pour recevoir le liquide entre des nervures adjacentes (16) lorsque l'objet est collé sur les nervures (16), ou en contact avec celles-ci.

3. Pompe selon la revendication 1, dans laquelle le dispositif de détection de liquide (12) est un dispositif de détection capacitif.

4. Pompe selon la revendication 1, dans laquelle le dispositif de détection de liquide (12) est une carte de circuit imprimé comportant un dispositif de détection capacitif.

5. Pompe selon la revendication 1, dans laquelle les nervures (16) sont configurées pour fournir une résistance à la chaleur et une rigidité structurelle afin d'empêcher la déformation de la surface de la paroi extérieure (20a) sous l'effet de la contrainte thermique.

6. Pompe selon la revendication 1, dans laquelle les nervures (16) incluent cinq (5) nervures.

7. Pompe selon la revendication 1, dans laquelle les nervures (16) sont disposées verticalement par rapport à l'axe de la pompe.

8. Pompe selon la revendication 1, dans laquelle les nervures (16) sont disposées horizontalement par rapport à l'axe de la pompe.

9. Pompe selon la revendication 1, dans laquelle les nervures (16) sont disposées symétriquement sur la surface de détection extérieure (20b).

10. Pompe selon la revendication 1, dans laquelle les nervures (16) incluent une nervure centrale (16) plus courte et des nervures extérieures (16) plus longues.

11. Pompe selon la revendication 1, dans laquelle les nervures (16) incluent sept (7) nervures.

12. Pompe selon la revendication 1, dans laquelle la pompe (10) est une pompe de cale destinée à être installée dans la coque d'un navire et à en pomper le liquide,
ou
une pompe de puisard pour configurer et pomper le liquide dans un puisard, ou
une pompe de vidange de douche pour configurer et pomper le liquide d'une vidange de douche.

13. Pompe selon la revendication 1, dans laquelle le dispositif de détection de liquide (12) inclut un capteur de niveau de liquide élevé configuré pour détecter un niveau de liquide élevé et mettre la pompe (10) en marche, et inclut un capteur de niveau de liquide bas configuré pour détecter un niveau de liquide bas et mettre la pompe (10) à l'arrêt.
